# EUROPEAN PATENT APPLICATION

(11) **EP 4 660 530 A1**
(43) Date of publication of application: **10.12.2025**
(21) Application number: 25173800.1
(22) Date of filing: 30.04.2025
(51) Int. Cl.: F23R 3/00, F23R 3/28, F23R 3/36, F02C 7/224

(54) **TURBINE ENGINE HAVING A FUEL SUPPLY AND COMBUSTION SECTION**

(30) Priority: 06.06.2024 US 202418735790
(71) Applicant: General Electric Company, Cincinnati, Ohio 45215 (US)
(72) Inventor: SAMPATH, Karthikeyan, 560066 Bengaluru (IN); NAIK, Pradeep, 560066 Bengaluru (IN); PAL, Sibtosh, Evendale, 45241 (US); BUCARO, Michael, Schenectady, 12345 (US); BENJAMIN, Michael, Evendale, 45241 (US); VISE, Steven, West Chester, 45069 (US); COOPER, Clayton, Evendale, 45241 (US); WICKERSHAM, Andrew, Evendale, 45241 (US)
(74) Representative: Openshaw & Co.

(57) **Abstract**

A turbine engine (10, 101) comprises a fuel supply (150, 250, 350, 450) having a fuel, and a heat exchanger (152, 252, 352, 452) fluidly coupled to the fuel supply (150, 250, 350, 450). The engine further includes a first fuel line (164, 264, 364, 464) fluidly coupled to a first portion (167) of the heat exchanger (152, 252, 352, 452) to receive the fuel from the heat exchanger at a first temperature (T1), and a second fuel line (166, 266, 366, 466) fluidly coupled to a second portion (169) of the heat exchanger to receive the fuel at a second temperature (T2), which is different from the first temperature (T1). A combustion section (14, 100, 200, 300, 400) is also provided, including a combustion chamber (46, 104, 204, 304, 404) that is fluidly coupled to both the first fuel line (164, 264, 364, 464) and the second fuel line (166, 266, 366, 466).

## Description

### TECHNICAL FIELD

The present subject matter relates generally to a turbine engine, and more specifically to a turbine engine having a combustion section and a fuel supply.

### BACKGROUND

Turbine engines are driven by a flow of combustion gases passing through the engine to rotate a multitude of turbine blades, which, in turn, rotate a compressor to provide compressed air to the combustor for combustion. A combustor can be provided within the turbine engine and is fluidly coupled with a turbine into which the combusted gases flow.

The use of hydrocarbon fuels in the combustor of a turbine engine is known. Generally, air and fuel are fed to a combustion chamber, the air and fuel are mixed, and then the fuel is burned in the presence of the air to produce hot gas. The hot gas is then fed to a turbine where it cools and expands to produce power. By-products of the fuel combustion typically include environmentally unwanted byproducts, such as nitrogen oxide and nitrogen dioxide (collectively called NOₓ), carbon monoxide (CO), unburned hydrocarbon (UHC) (e.g., methane and volatile organic compounds that contribute to the formation of atmospheric ozone), and other oxides, including oxides of sulfur (e.g., SO₂ and SO₃).

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a schematic representation of a turbine engine, the turbine engine including a compression section, a combustion section, and a turbine section.
FIG. 2 depicts a cross-sectional view of the combustion section taken along line II-II of FIG. 1, further illustrating a set of fuel nozzles.
FIG. 3 is a schematic of a side sectional view taken along line III-III of FIG. 2, further illustrating a fuel nozzle exhausting into a combustion chamber .
FIG. 4 is a schematic view of a turbine engine suitable for use as the turbine engine of FIG. 1, further illustrating a fuel supply and a combustion section fluidly coupled to the combustion section, the combustion section including a wall, a combustion chamber, and a fuel nozzle.
FIG. 5 is a schematic cross-sectional view of the combustion section of FIG. 4, further illustrating a flame within the combustion chamber.
FIG. 6 is a schematic cross-sectional view of an exemplary combustion section suitable for use as the combustion section of FIG. 4, further illustrating a plurality of fuel nozzles having a first set of fuel nozzles and a second set of fuel nozzles alternately arranged along a wall.
FIG. 7 is a schematic cross-sectional view of an exemplary combustion section suitable for use as the combustion section of FIG. 4, further illustrating a wall and a plurality of fuel nozzles having a first set of fuel nozzles and a second set of fuel nozzles non-alternately arranged along the wall.
FIG. 8 is a schematic cross-sectional view of an exemplary combustion section suitable for use as the combustion section of FIG. 4, further illustrating a wall and a plurality of fuel nozzles having a first set of fuel nozzles and a second set of fuel nozzles non-alternately arranged along the wall in a first sector and a second sector.
FIG. 9 is a schematic cross-sectional view of an exemplary combustion section suitable for use as the combustion section of FIG. 4, further illustrating a wall and a plurality of fuel nozzles having a first set of fuel nozzles and a second set of fuel nozzles non-alternately arranged along the wall in a first sector, a second sector, a third sector, and a fourth sector.

### DETAILED DESCRIPTION

Aspects of the disclosure described herein are directed to a turbine engine including a combustion section and a fuel supply. The combustion section includes a wall at least partially defining a combustion chamber. A fuel from the fuel supply is fed to the combustion chamber at varying temperatures. As a non-limiting example, the fuel is fed to the combustion chamber at a first temperature and a second temperature.

During low power conditions of the turbine engine (e.g., during relight and ground-start), the fuel within the combustion chamber tends to spread out before being ignited. The spreading out of the fuel at lower power conditions occurs because a flow of compressed air which is mixed with the fuel, has a lower momentum than during high power conditions of the turbine engine (e.g., during takeoff or flight). The spreading out of the fuel can cause some of the fuel to enter regions of the combustion section or region exterior of the combustion section where it is undesirable to have a fuel present. If the fuel were to be ignited within these regions, the flame generated by the ignition of the fuel could cause damage to portions of the turbine engine.

Having a flow of fuel at varying temperatures being fed to the combustion chamber increases the overall momentum of the flow of fuel within the combustion chamber. The increase in momentum, in turn, limits the amount that the flow of fuel within the combustion chamber spreads out. This is especially advantageous for use in the lower power conditions of the turbine engine.

The turbine engine, as described herein, is especially well adapted for the use of hydrogen fuel (hereinafter, "H2 fuel"). Specifically, the turbine engine is especially well adapted to feed a flow of H2 fuel to the combustion chamber. The flow of H2 fuel can include a gaseous H2 fuel, a liquid H2 fuel, or a combination thereof. The flow of H2 fuel can further be mixed with other fuels or fluids such as, but not limited to, natural gas, coke oven gas, diesel, Jet-A, or the like. H2 fuels, when compared to traditional fuels (e.g., carbon fuels, petroleum fuels, etc.), have a higher burn temperature and velocity. H2 fuel, prior to being ignited, has a higher tendency to spread out especially when in its gaseous form. In some instances, a portion of the H2 fuel can remain within a fuel nozzle such that when ignition of the H2 fuel within the combustion chamber occurs, the flame propagates and flashes back into the fuel nozzle. Further, the H2 fuel, once fed to the combustion chamber, spreads out faster than traditional fuels. As such, it is important to ensure that the H2 fuel has a desired momentum when being fed to the combustion chamber to ensure that the H2 fuel does not ignite or spread to undesired regions. Feeding the flow of fuel at varying temperatures to the combustion chamber addresses this issue especially prevalent with H2 fuels.

As used herein, the term "gaseous fuel" or iterations thereof refers to a combustible fuel in a gaseous state. It will be appreciated that gaseous fuel is different from atomized fuel. Atomized fuel utilizes an impeller, orifices, or the like to take a liquid fuel and atomize the liquid fuel into very small droplets.

For purposes of illustration, the present disclosure will be described with respect to a turbine engine (gas turbine engine). It will be understood, however, that aspects of the disclosure described herein are not so limited and that a combustion section and fuel supply as described herein can be implemented in engines, including but not limited to turbojet, turboprop, turboshaft, and turbofan engines. Aspects of the disclosure discussed herein may have general applicability within non-aircraft engines having a combustion section and fuel supply, such as other mobile applications and non-mobile industrial, commercial, and residential applications.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

As used herein, the terms "first" and "second" may be used interchangeably to distinguish one component from another and are not intended to signify location or importance of the individual components.

The terms "forward" and "aft" refer to relative positions within a turbine engine or vehicle, and refer to the normal operational attitude of the turbine engine or vehicle. For example, with regard to a turbine engine, forward refers to a position closer to an engine inlet and aft refers to a position closer to an engine exhaust.

As used herein, the term "upstream" refers to a direction that is opposite the fluid flow direction, and the term "downstream" refers to a direction that is in the same direction as the fluid flow. The term "fore" or "forward" means in front of something and "aft" or "rearward" means behind something. For example, when used in terms of fluid flow, fore/forward can mean upstream and aft/rearward can mean downstream.

The term "fluid" may be a gas or a liquid. The term "fluidly coupled" means that a fluid is capable of making the connection between the areas specified.

Additionally, as used herein, the terms "radial" or "radially" refer to a direction away from a common center. For example, in the overall context of a turbine engine, radial refers to a direction along a ray extending between a center longitudinal axis of the engine and an outer engine circumference.

All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of aspects of the disclosure described herein. Connection references (e.g., attached, coupled, connected, and joined) are to be construed broadly and can include intermediate structural elements between a collection of elements and relative movement between elements unless otherwise indicated. As such, connection references do not necessarily infer that two elements are directly connected and in fixed relation to one another. The exemplary drawings are for purposes of illustration only and the dimensions, positions, order and relative sizes reflected in the drawings attached hereto can vary.

The singular forms "a", "an", and "the" include plural references unless the context clearly dictates otherwise. Furthermore, as used herein, the term "set" or a "set" of elements can be any number of elements, including only one.

As used herein, a "system" or a "controller module" can include at least one processor and memory. Non-limiting examples of the memory can include Random Access Memory (RAM), Read-Only Memory (ROM), flash memory, or one or more different types of portable electronic memory, such as discs, Digital Versatile Discs (DVDs), Compact Disc - Read Only Memory (CD-ROMs), etc., or any suitable combination of these types of memory. The processor can be configured to run any suitable programs or executable instructions designed to carry out various methods, functionality, processing tasks, calculations, or the like, to enable or achieve the technical operations or operations described herein. The program can include a computer program product that can include machine-readable media for carrying or having machine-executable instructions or data structures stored thereon. Such machine-readable media can be any available media, which can be accessed by a general purpose or special purpose computer or other machine with a processor. Generally, such a computer program can include routines, programs, objects, components, data structures, algorithms, etc., that have the technical effect of performing particular tasks or implement particular abstract data types.

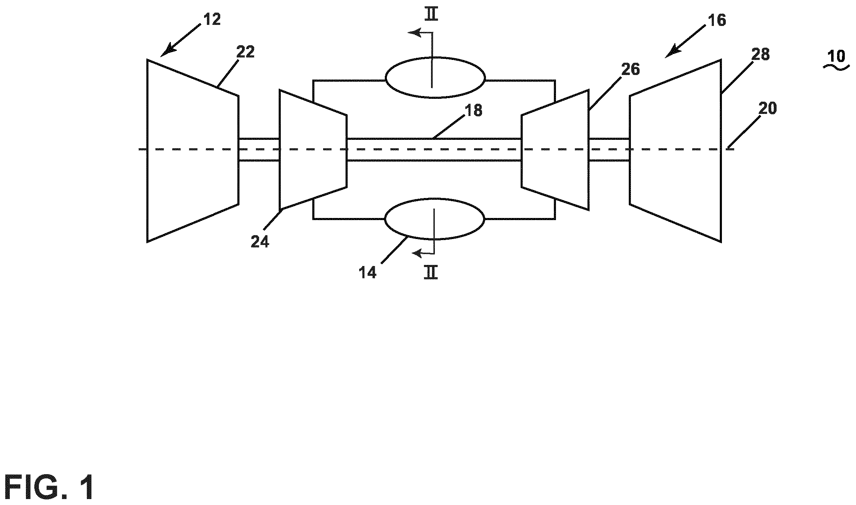

FIG. 1 is a schematic view of a turbine engine 10. As a non-limiting example, the turbine engine 10 can be used within an aircraft. The turbine engine 10 includes, at least, a compression section 12, a combustion section 14, and a turbine section 16 in serial flow arrangement. A drive shaft 18 rotationally couples the compression section 12 and the turbine section 16, such that rotation of one affects the rotation of the other, and defines a rotational axis or engine centerline 20 for the turbine engine 10.

The compression section 12 can include a low-pressure (LP) compressor 22, and a high-pressure (HP) compressor 24 serially fluidly coupled to one another. The turbine section 16 can include an LP turbine 28, and an HP turbine 26 serially fluidly coupled to one another. The drive shaft 18 operatively couples the LP compressor 22, the HP compressor 24, the LP turbine 28 and the HP turbine 26 together. Alternatively, the drive shaft 18 can include an LP drive shaft and an HP drive shaft. The LP drive shaft couples the LP compressor 22 to the LP turbine 28, and the HP drive shaft couples the HP compressor 24 to the HP turbine 26. An LP spool is defined as the combination of the LP compressor 22, the LP turbine 28, and the LP drive shaft such that the rotation of the LP turbine 28 applies a driving force to the LP drive shaft, which in turn rotates the LP compressor 22. An HP spool is defined as the combination of the HP compressor 24, the HP turbine 26, and the HP drive shaft such that the rotation of the HP turbine 26 applies a driving force to the HP drive shaft which in turn rotates the HP compressor 24.

The compression section 12 includes a plurality of axially spaced stages. Each stage includes a set of circumferentially-spaced rotating blades and a set of circumferentially-spaced stationary vanes. The compressor blades for a stage of the compression section 12 can be mounted to a disk, which is mounted to the drive shaft 18. Each set of blades for a given stage can have its own disk. The vanes of the compression section 12 can be mounted to a casing which can extend circumferentially about the turbine engine 10. It will be appreciated that the representation of the compression section 12 is merely schematic and that there can be any number of stages. Further, it is contemplated, that there can be any other number of components within the compression section 12.

Similar to the compression section 12, the turbine section 16 includes a plurality of axially spaced stages, with each stage having a set of circumferentially-spaced, rotating blades and a set of circumferentially-spaced, stationary vanes. The turbine blades for a stage of the turbine section 16 can be mounted to a disk which is mounted to the drive shaft 18. Each set of blades for a given stage can have its own disk. The vanes of the turbine section 16 can be mounted to the casing in a circumferential manner. It is noted that there can be any number of blades, vanes and turbine stages as the illustrated turbine section is merely a schematic representation. Further, it is contemplated, that there can be any other number of components within the turbine section 16.

The combustion section 14 is provided serially between the compression section 12 and the turbine section 16. The combustion section 14 is fluidly coupled to at least a portion of the compression section 12 and the turbine section 16 such that the combustion section 14 at least partially fluidly couples the compression section 12 to the turbine section 16. As a non-limiting example, the combustion section 14 can be fluidly coupled to the HP compressor 24 at an upstream end of the combustion section 14 and to the HP turbine 26 at a downstream end of the combustion section 14.

During operation of the turbine engine 10, ambient or atmospheric air is drawn into the compression section 12 via a fan (not illustrated) upstream of the compression section 12, where the air is compressed defining a compressed air. The compressed air then flows into the combustion section 14 where the compressed air is mixed with fuel and ignited, thereby generating combustion gases. Some work is extracted from these combustion gases by the HP turbine 26, which drives the HP compressor 24. The combustion gases are discharged into the LP turbine 28, which extracts additional work to drive the LP compressor 22, and the exhaust gas is ultimately discharged from the turbine engine 10 via an exhaust section (not illustrated) downstream of the turbine section 16. The driving of the LP turbine 28 drives the LP spool to rotate the fan (not illustrated) and the LP compressor 22. The compressed air flow and the combustion gases can together define a working air flow that flows through the fan, compression section 12, combustion section 14, and turbine section 16 of the turbine engine 10.

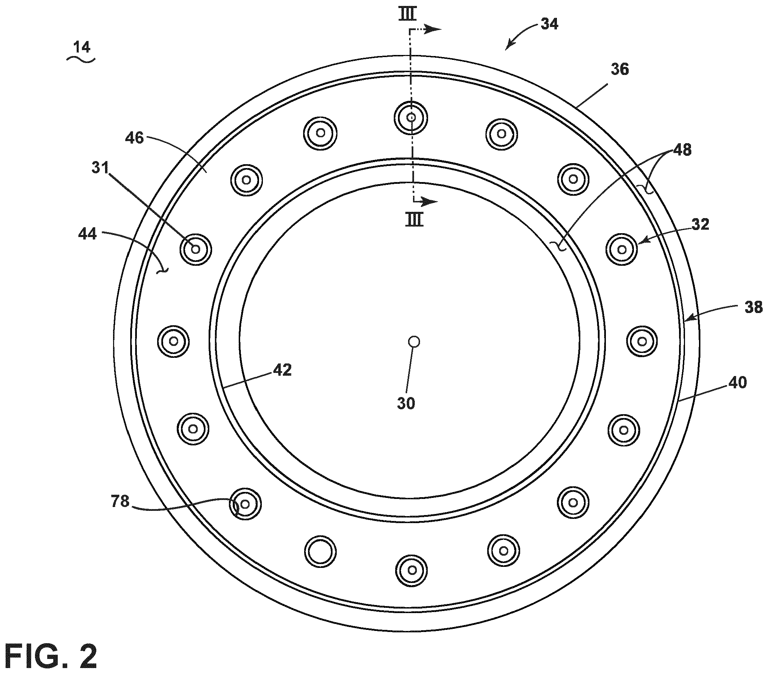

FIG. 2 depicts a cross-sectional view of the combustion section 14 along line II-II of FIG. 1. For purposes of illustration, the drive shaft 18 (FIG. 1) has been removed. The combustion section 14 includes a combustor 34. The combustor 34 includes a dome wall 44 including a set of fuel nozzle openings 78. The combustor 34 includes a set of fuel nozzles 32 extending through the set of fuel nozzle openings. The set of fuel nozzles 32 are annularly arranged about a combustor centerline 30. The combustor centerline 30 can be the engine centerline 20 (FIG. 1) of the turbine engine 10 (FIG. 1). Additionally, or alternatively, the combustor centerline 30 can be a centerline for the combustion section 14, a single combustor, or a set of combustors that are arranged about the combustor centerline 30. Each fuel nozzle of the set of fuel nozzles 32 includes a fuel nozzle assembly centerline 31.

The set of fuel nozzles 32 can include rich cups, lean cups, or a combination of both rich and lean cups annularly provided about the engine centerline. It should be appreciated that the annular arrangement of fuel nozzles can be one or multiple fuel nozzles and one or more of the fuel nozzles can have different characteristics. The combustor 34 is defined, at least in part, by a combustor liner 38. The combustor 34 can have a can, can-annular, or annular arrangement depending on the type of engine in which the combustor 34 is located. In a non-limiting example, the combustor 34 can have a combination arrangement as further described herein located within a casing 36 of the engine. The combustor liner 38, as illustrated by way of example, can be annular. The combustor liner 38 can include an outer combustor liner 40 and an inner combustor liner 42 concentric with respect to each other and annular about the engine centerline. The dome wall 44 together with the combustor liner 38 can define a combustion chamber 46 having an annular configuration disposed about the combustor centerline 30. The set of fuel nozzles 32 can be fluidly coupled to the combustion chamber 46. A compressed air passageway 48 can be defined at least in part by both the combustor liner 38 and the casing 36.

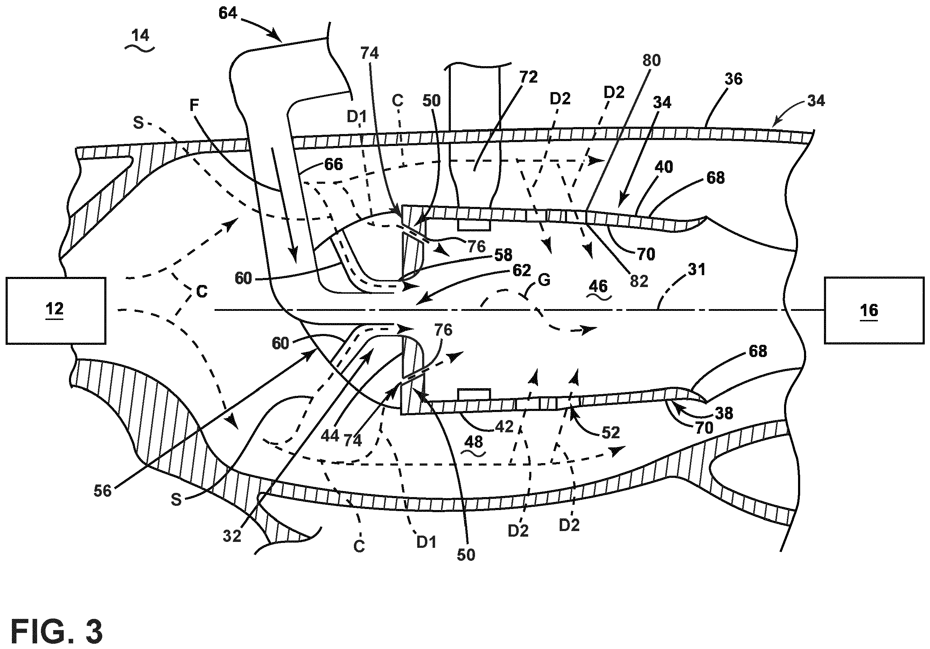

FIG. 3 depicts a cross-section view taken along line III-III of FIG. 2 illustrating the combustion section 14. At least one flame shaping passage can fluidly connect compressed air and the combustion chamber 46. By way of example, the at least one flame shaping passage is illustrated as first set of flame shaping holes 50 or second set of flame shaping holes 52. The combustor 34 can include the first set of flame shaping holes 50, the second set of flame shaping holes 52, or both the first set of flame shaping holes 50 and the second set of flame shaping holes 52.

The first set of flame shaping holes 50 pass through the dome wall 44, fluidly coupling compressed air (C) from the compression section 12 (FIG. 1) or the compressed air passageway 48 to the combustion chamber 46. The second set of flame shaping holes 52 pass through the combustor liner 38, fluidly coupling compressed air from the compressed air passageway 48 to the combustion chamber 46.

Each fuel nozzle of the set of fuel nozzles 32 can be coupled to and disposed within a dome assembly 56. Each fuel nozzle of the set of fuel nozzles 32 can include a flare cone 58 and a swirler 60. The flare cone 58 includes an outlet 62 directly fluidly coupled to the combustion chamber 46. Each fuel nozzle of the set of fuel nozzles 32 is fluidly coupled to a fuel inlet 64 via a passageway 66.

Both the inner combustor liner 42 and the outer combustor liner 40 have an outer surface 68 and an inner surface 70 at least partially defining the combustion chamber 46. The combustor liner 38 can be made of one continuous monolithic portion or be multiple monolithic portions assembled together to define the inner combustor liner 42 and the outer combustor liner 40. By way of non-limiting example, the outer surface 68 can define a first piece of the combustor liner 38 while the inner surface 70 can define a second piece of the combustor liner 38 that when assembled together form the combustor liner 38. As described herein, the combustor liner 38 includes the second set of flame shaping holes 52. It is further contemplated that the combustor liner 38 can be any type of combustor liner 38, including but not limited to a single wall or a double walled liner or a tile liner. An ignitor 72 can be provided at the combustor liner 38 and fluidly coupled to the combustion chamber 46, at any location, by way of non-limiting example upstream of the second set of flame shaping holes 52.

During operation, compressed air (C) from a compressed air supply, such as the LP compressor 22 or the HP compressor 24 of FIG. 1, can flow from the compression section 12 to the combustor 34. A portion of the compressed air (C) can flow through the dome assembly 56. A first part of the compressed air (C) flowing through the dome assembly 56 can be fed to each fuel nozzle of the set of fuel nozzles 32 via the swirler 60 as a swirled airflow (S). A flow of fuel (F) is fed to each fuel nozzle of the set of fuel nozzles 32 via the fuel inlet 64 and the passageway 66. The swirled airflow (S) and the flow of fuel (F) are mixed at the flare cone 58 and fed to the combustion chamber 46 as a fuel/air mixture. The ignitor 72 can ignite the fuel/air mixture to define a flame within the combustion chamber 46, which generates a combustion gas (G). While shown as starting axially downstream of the outlet 62, it will be appreciated that the fuel/air mixture can be ignited at or near the outlet 62.

A second part of the compressed air (C) flowing through one or more portions of the dome assembly 56 can be fed to the first set of flame shaping holes 50 as a first flame shaping airflow (D1). That is, a portion of the compressed air (C) from the compression section 12 can flow through the dome wall 44 and into the combustion chamber 46 by passing through the first set of flame shaping holes 50. An inlet 74 is defined by a portion of one or more flame shaping holes of the first set of flame shaping holes 50. The inlet 74 is fluidly coupled to the compressed air (C). The first flame shaping airflow (D1) enters the one or more flame shaping holes of the first set of flame shaping holes 50 at the inlet 74 and exits the one or more flame shaping holes of the first set of flame shaping holes 50 at an outlet 76 located at an aft surface of the dome wall 44.

Another portion of the compressed air (C) can flow through the compressed air passageway 48 and can be fed to the second set of flame shaping holes 52 as a second flame shaping airflow (D2). In other words, another portion of the compressed air (C) can flow axially past the dome assembly 56 and enter the combustion chamber 46 by passing through the second set of flame shaping holes 52. That is, compressed air (C) can flow through the combustor liner 38 and into the combustion chamber 46 by passing through the second set of flame shaping holes 52.

The first flame shaping airflow (D1) can be used to direct and shape the flame. The second flame shaping airflow (D2) can be used to direct the combustion gas (G). In other words, the first set of flame shaping holes 50 or the second set of flame shaping holes 52 extending through the dome wall 44 or the combustor liner 38, respectively, direct compressed air (C) into the combustion chamber 46, where the directed compressed air (C) is used to control, shape, cool, or otherwise contribute to the combustion process in the combustion chamber 46.

The combustor 34 shown in FIG. 3 is well suited for the use of a hydrogen-containing gas as the fuel because it helps contain the faster moving flame front associated with hydrogen fuel, as compared to traditional hydrocarbon fuels. However, the combustor 34 can be used with other fuels, such as gaseous and liquid hydrocarbon fuels.

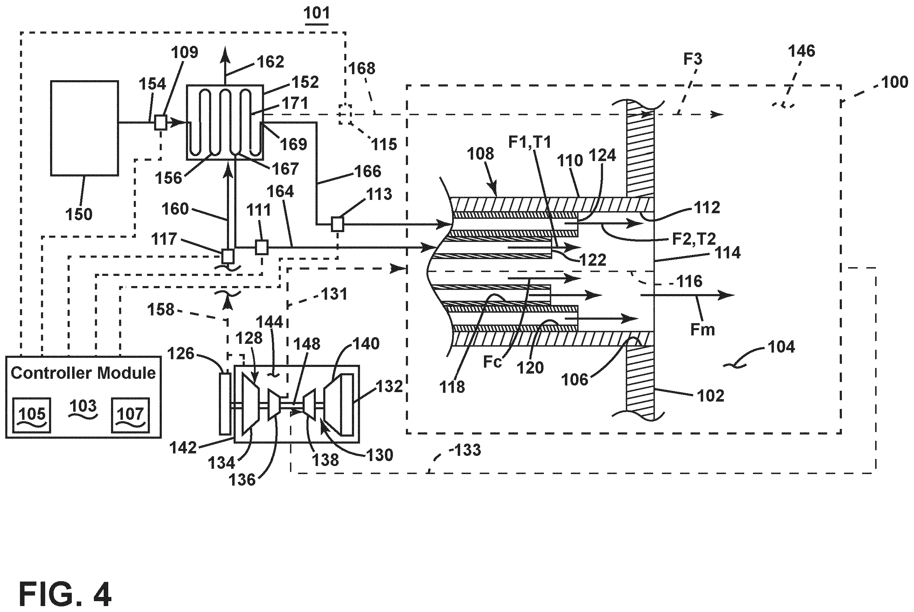

FIG. 4 is a schematic view of a turbine engine 101 suitable for use as the turbine engine 10 of FIG. 1. The turbine engine 101 is similar to the turbine engine 10, therefore, like parts will be identified with like names with it being understood that the description of the turbine engine 10 applies to the turbine engine 101 unless noted otherwise.

The turbine engine 101 includes, in serial flow arrangement, a fan section 126, a compression section 128, a combustion section 100, a turbine section 130 and an exhaust section 132. The compression section 128 can include an LP compressor 134 and an HP compressor 136. The turbine section 130 can include an HP turbine 138 and an LP turbine 140. The exhaust section 132 is fluidly coupled to a downstream end of the turbine section 130 (e.g., the LP turbine 140) and defines a fluid exhaust of the turbine engine 101. A drive shaft 148 operably couples at least a portion of the fan section 126, the compression section 128, and the turbine section 130.

A downstream end of the compression section 128 (e.g., the HP compressor 136) is fluidly coupled to the combustion section 100 and defines a working airflow input 131 to the combustion section 100. An upstream end of the turbine section 130 (e.g., the HP turbine 138) is fluidly coupled to the combustion section 100 and defines a working airflow output 133 from the combustion section 100.

The turbine engine 101 includes a bleed air conduit 158. The bleed air conduit 158 is any suitable tube or conduit configured to draw a flow of bleed air (e.g., a working airflow) from one or more portions of the turbine engine 101. The bleed air conduit 158 can include any number of one or more conduits that draw bleed air from at least one of the fan section 126, the compression section 128, the turbine section 130, the exhaust section 132, or a combination thereof.

The turbine engine 101 includes an engine casing 142 defining an interior 144. At least a portion of the compression section 128, the combustion section 100, the turbine section 130, and the exhaust section 132 are provided within the interior 144. In some non-limiting examples, the turbine engine 101 is an unducted turbine engine where the fan section 126 is provided outside of the interior 144. In other non-limiting examples, the turbine engine 101 is a turbofan engine where the fan section 126 is provided within the interior 144. The engine casing 142 can include a least one of a nacelle, an engine core casing, a fan casing, or any combination thereof.

The combustion section 100 includes a combustion section interior 146 at least partially defined by a casing (e.g., the casing 36 of FIG. 3) of the combustion section 100. It will be appreciated that the combustion section 100 is provided within the interior 144 defined by the engine casing 142. As such, the combustion section interior 146 is a portion of the interior 144. As used herein, the interior 144 and the combustion section interior 146 will be referred to as separate interiors. It will be appreciated that the interior 144 includes all portions of the turbine engine 101 housed by the engine casing 142. The combustion section interior 146 refers specifically to the interior of the combustion section 100.

The combustion section 100 includes a wall 102 at least partially defining a combustion chamber 104. The wall 102 is any suitable wall or combination of walls such as, but not limited to, a dome wall (e.g., the dome wall 44 of FIG. 2), a combustor liner (e.g., the combustor liner 38 of FIG. 2), or a combination thereof. The wall 102 includes a fuel nozzle opening 106.

The combustion section 100 includes a fuel nozzle 108 extending into or through the fuel nozzle opening 106. While a single fuel nozzle 108 is illustrated, it will be appreciated that the combustion section 100 includes any number of one or more fuel nozzles 108 extending into or through the wall 102.

The fuel nozzle 108 includes a fuel nozzle body 110. The fuel nozzle body 110 defines a central channel 112. The central channel 112 opens into the combustion chamber 104 at a fuel nozzle outlet 114. The fuel nozzle 108 includes a fuel nozzle centerline 116.

The fuel nozzle 108 includes any number of one or more fuel injection channels. As a non-limiting example, the fuel nozzle 108 can include a first fuel injection channel 118 and a second fuel injection channel 120. The first fuel injection channel 118, the second fuel injection channel 120, or a combination thereof can be formed as separate bodies from the fuel nozzle body 110. Alternatively, at least one of the first fuel injection channel 118, the second fuel injection channel 120, or a combination thereof can be formed within or integrally with the fuel nozzle body 110. The first fuel injection channel 118 is provided radially inward of the second fuel injection channel 120, with respect to the fuel nozzle centerline 116.

The first fuel injection channel 118 and the second fuel injection channel 120 open into the central channel 112 at a first fuel orifice 122 and a second fuel orifice 124, respectively. The first fuel orifice 122, the second fuel orifice 124, or a combination thereof can be formed as a continuous channel (e.g., an annular channel) extending circumferentially about the fuel nozzle centerline 116. The first fuel orifice 122, the second fuel orifice 124, or a combination thereof can be formed as a plurality of holes or channels circumferentially spaced about the fuel nozzle centerline 116.

The first fuel orifice 122, the second fuel orifice 124, or a combination thereof can be axially offset from or axially coincide with the fuel nozzle outlet 114. As illustrated, the first fuel orifice 122 and the second fuel orifice 124 are each provided axially forward of the fuel nozzle outlet 114. Alternatively, the first fuel injection channel 118, the second fuel injection channel 120, or a combination thereof can extend axially beyond the fuel nozzle outlet 114 and into the combustion chamber 104.

The turbine engine 101 includes a fuel supply 150. The fuel supply 150 is any suitable container or body capable of containing and storing a fuel (e.g., the fuel (F) of FIG. 3). The fuel within the fuel supply 150 is in any suitable state (e.g., liquid, solid or gas). As a non-limiting example, the fuel within the fuel supply 150 is a liquid fuel.

The turbine engine 101 includes a heat exchanger 152. The heat exchanger 152 has an internal flow path 156. The heat exchanger 152 is any suitable body, assembly, or component configured to transfer heat between a first fluid provided within the internal flow path 156 and a second fluid in thermal communication with the internal flow path 156.

The fuel supply 150 and the heat exchanger 152, as illustrated, are outside of the combustion section interior 146 and the interior 144. It will be appreciated, however, that the fuel supply 150, the heat exchanger 152, or a combination thereof can be provided within the interior 144 exterior of the combustion section interior 146, or within the combustion section interior 146. Alternatively, the fuel supply 150, the heat exchanger 152, or a combination thereof can be provided exterior of the engine casing 142. As a non-limiting example, the turbine engine 101 can be coupled to or otherwise formed by an exterior body (e.g., a vehicle, a wing, a pylon, or the like). The fuel supply 150, the heat exchanger 152, or a combination thereof can be provided within or along the exterior body.

A heat exchanger inlet conduit 154 fluidly couples the fuel supply 150 to the heat exchanger 152. The heat exchanger inlet conduit 154 defines a fluid input to a respective portion of the heat exchanger 152. The heat exchanger inlet conduit 154 fluidly couples the fuel within the fuel supply 150 to the internal flow path 156.

A heat source inlet conduit 160 fluidly couples the bleed air conduit 158 to the heat exchanger 152. The heat source inlet conduit 160 defines a fluid input of a heating fluid to the heat exchanger 152. A heat source outlet conduit 162 exhausts fluid from the heat source inlet conduit 160 exterior the heat exchanger 152. The heat source outlet conduit 162 defines a fluid output of the heating fluid from the heat exchanger 152. The heat source outlet conduit 162 can exhaust to any suitable portion of the turbine engine 101 or exterior the turbine engine 101.

A first fuel line 164 and a second fuel line 166 fluidly couple the internal flow path 156 to the combustion chamber 104. The first fuel line 164 and the second fuel line 166 each define fluid outputs from the heat exchanger 152. The first fuel line 164 is fluidly coupled to a first portion 167 of the internal flow path 156, while the second fuel line 166 is fluidly coupled to a second portion 169 of the internal flow path 156. The first portion 167 is different from the second portion 169. As a non-limiting example, the first portion 167 is upstream of the second portion 169. The turbine engine 101 includes any number of two or more fuel lines. As a non-limiting example, the turbine engine 101 can include a third fuel line 168 fluidly coupling a third portion 171 of the internal flow path 156 to the combustion chamber 104. The third portion 171 is different from the first portion 167 and the second portion 169. As a non-limiting example, the third portion 171 can be fluidly downstream of the first portion 167 and upstream of the second portion 169.

The turbine engine 101 can include a set of valves that selectively open or close a respective conduit that the valve is provided along. As a non-limiting example, the turbine engine 101 can include a first valve 109 provided along the heat exchanger inlet conduit 154. The first valve 109 can selectively fluidly couple the fuel supply 150 to the internal flow path 156 of the heat exchanger 152. As a non-limiting example, the turbine engine 101 can include a second valve 111 provided along the first fuel line 164. The second valve 111 can selectively fluidly couple the first portion 167 to the combustion chamber 104. As a non-limiting example, the turbine engine 101 can include a third valve 113 provided along the second fuel line 166. The third valve 113 can selectively fluidly couple the second portion 169 to the combustion chamber 104. As a non-limiting example, the turbine engine 101 can include a fourth valve 115 provided along the third fuel line 168. The fourth valve 115 can selectively fluidly couple the third portion 171 to the combustion chamber 104. As a non-limiting example, the turbine engine 101 can include a fifth valve 117 provided along the heat source inlet conduit 160. The fifth valve 117 can selectively fluidly couple the heat source inlet conduit 160 to the internal flow path 156. Each valve of the set of valves is any suitable valve configured to control (e.g., restrict, enable, prohibit) a flow of fluid to flow through a respective conduit that the valve is provided along. Each valve of the set of valves can be any suitable valve such as, but not limited to, a pilot valve, a check valve, a butterfly valve, or the like.

The turbine engine 101 can include a controller module 103. The controller module 103 has a processor 105 and a memory 107. The memory 107 can include random access memory (RAM), read-only memory (ROM), flash memory, or one or more different types of portable electronic memory, such as discs, DVDs, CD-ROMs, etc., or any suitable combination of these types of memory.

The controller module 103 can be operably or communicatively coupled to various portions of the system described herein and be used to control the operation of the various portions of the system described herein. As a non-limiting example, the controller module 103 can be coupled to and be configured to control the operation of the first valve 109, the second valve 111, the third valve 113, the fourth valve 115, the fifth valve 117 or any other valve. It will be, further comprising appreciated that sensors can be provided through the turbine engine 101 to measure various characteristics of the turbine engine 101 or components thereof. For example, a sensor can be located within the combustion chamber 104 to measure a temperature of a flame within the combustion chamber 104. As a non-limiting example, a set of temperature sensors, flow sensors, or the like can be coupled to the first fuel line 164, the second fuel line 166, or any other fuel line to monitor flow characteristics (e.g., momentum, velocity, etc.) or temperature of a flow of fluid within the first fuel line 164, the second fuel line 166, or any other fuel line.

During operation, the working airflow input 131 feeds a flow of compressed air (Fc) (e.g., the flow of compressed air (C) of FIG. 3) to the combustion section 100. The flow of compressed air (Fc) is fed to the central channel 112 of the fuel nozzle 108.

The fuel within the fuel supply 150 is fed to the internal flow path 156 of the heat exchanger 152 through the heat exchanger inlet conduit 154. A flow of bleed air from the fan section 126, the compression section 128, the turbine section 130, the exhaust section 132, or a combination thereof is fed through the bleed air conduit 158 and into the heat source inlet conduit 160. The bleed air within the bleed air conduit 158 is at a higher temperature than the fuel within the heat exchanger inlet conduit 154. As such, heat is transferred from the bleed air within the heat source inlet conduit 160 to the fuel within the internal flow path 156, heating the fuel within the internal flow path 156 as it flows through the heat exchanger 152.

The bleed air that transfers heat to the fuel within the internal flow path 156 is subsequently exhausted from the heat exchanger 152 via the heat source outlet conduit 162. As the bleed air transfers heat to the fuel, the bleed air within the heat source outlet conduit 162 is cooler than the bleed air within the heat source inlet conduit 160. As such, the bleed air within the heat source outlet conduit 162 can be fed back to a respective portion of the turbine engine 101 (e.g., the fan section 126, the compression section 128, the turbine section 130, the exhaust section 132, or a combination thereof) and be used to cool a component (e.g.., a casing, a blade, a vane, or the like) within the respective portion of the turbine engine 101. Alternatively, the bleed air within the heat source outlet conduit 162 can be exhausted exterior the turbine engine 101.

The first fuel line 164 fluidly couples the fuel at the first portion 167 and feeds it to the combustion chamber 104 (e.g., through the fuel nozzle 108) as a first flow of fuel (F1). The second fuel line 166 fluidly couples the fuel at the second portion 169 and feeds it to the combustion chamber 104 (e.g., through the fuel nozzle 108) as a second flow of fuel (F2). The third fuel line 168 can fluidly couple the fuel at the third portion 171 and feed it to the combustion chamber as a third flow of fuel (F3).

The fuel within the internal flow path 156 is heated as it flows through the internal flow path 156. The first flow of fuel (F1), which is drawn from the first portion 167, has a first temperature (T1). The second flow of fuel (F2), which is drawn from the second portion 169, has a second temperature (T2), The third flow of fuel (F3), which is drawn from the third portion 171, has a third temperature (T3). The first temperature (T1) is different from the second temperature (T2). The second temperature (T2) and the first temperature (T1) are different from the third temperature (T3). In relation to each other, the first temperature (T1) is greater than or equal to 20% and less than or equal to 80% of the second temperature (T2).

Put another way, the first fuel line 164 is configured to supply a flow of a first fuel to the combustion chamber 104 at the first temperature (T1). The second fuel line 166 is configured to supply a flow of a second fuel to the combustion chamber 104 at the second temperature (T2). The third fuel line 168 is configured to supply a flow of a third fuel to the combustion chamber 104 at the third temperature (T3). The first fuel, the second fuel, and the third fuel can all be the same fuel (e.g., all be 100% H2 fuel). Alternatively, at least one of the first fuel, the second fuel, the third fuel, or any other fuel can be mixed with another fuel (e.g., propane, methane, etc.) or a diluent prior to the respective fuel being fed to the combustion chamber 104. It is contemplated that the phase of matter (e.g., a liquid phase of matter, a solid phase of matter, or a gaseous phase of matter) can vary between fuels. As a non-limiting example, the first fuel at the first portion 167 can be a liquid H2 fuel while the second fuel at the second portion 169 can be a gaseous H2 fuel.

It is contemplated that some fuels will ignite if they reach a certain temperature. This temperature is hereinafter referred to as the "auto-ignition temperature". The first temperature (T1), the second temperature (T2), the third temperature (T3), or any other temperature of the fuel within the internal flow path 156 is below the auto-ignition temperature of the fuel within the internal flow path 156.

It has been found that fuels at varying temperatures have different momentums or velocities. Table I, below, illustrates the variation in momentum for a given fuel. In Table I, pure H2 gaseous fuel is used as the fuel. It will be appreciated, however, that a similar relationship is experienced for other types of fuel.

**TABLE I**

| **Fuel temperature (Tf) (°F)** | **Momentum ratio (Momentum at Tf/Momentum at 55°F)** |
|---|---|
| -400 | 0.1 |
| -300 | 0.3 |
| -200 | 0.5 |
| -100 | 0.7 |
| 55 | 1 |
| 300 | 1.5 |

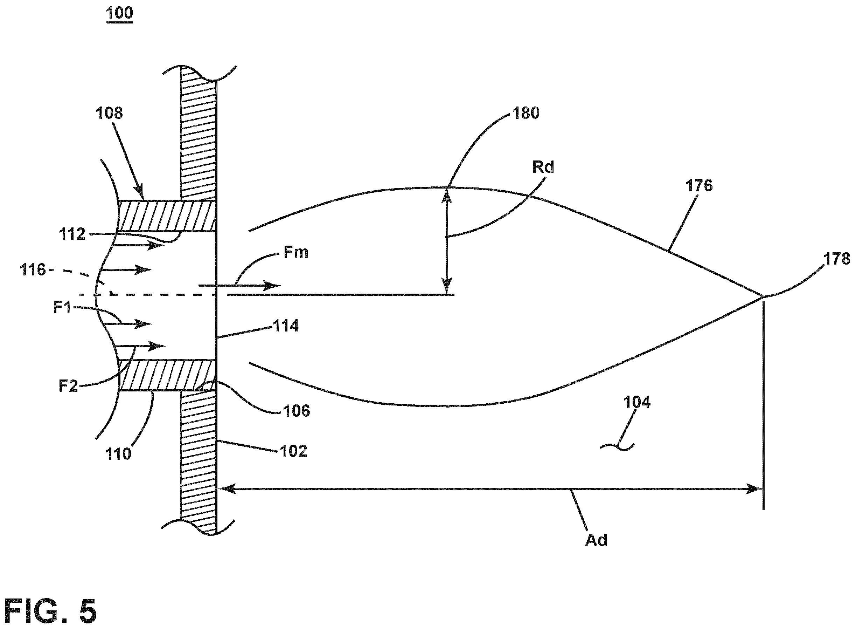

Assuming that the first flow of fuel (F1) and the second flow for fuel (F2) are the same fuel (e.g., have both H2 fuel), sine the first temperature (T1) is lower than the second temperature (T2), the first flow of fuel (F1) will move slower than the second flow of fuel (F2). Put another way, the momentum ratio of the first flow of fuel (F1) is lower than the momentum ratio of the second flow of fuel (F2) as the first temperature (T1) is lower than the second temperature (T2). It will be appreciated that the configuration can be switched such that the first fuel injection channel 118 surrounds the second fuel injection channel 120 and that the higher temperature fuel (e.g.., the second temperature (T2)) is surrounded by the lower temperature fuel (e.g., the first temperature (T1)). The use of each of these scenarios will be described in further detail below in relation to FIG. 5.

The flow of compressed air (Fc) is fed to the central channel 112 and mixed with any fuel within the central channel 112 (e.g., the first flow of fuel (F1) and the second flow of fuel (F2)) to define a mixed flow of fuel and air (Fm). The mixed flow of fuel and air (Fm) is then fed to the combustion chamber 104 through the fuel nozzle outlet 114. The mixed flow of fuel and air (Fm) is subsequently ignited within the combustion chamber 104 and generates a flow of combustion gases (e.g., the combustion gases (G) of FIG. 3). The combustion gases are then fed to the turbine section 130 where work is extracted from the combustion gases to drive the compression section 128 and the fan section 126. The combustion gases are ultimately exhausted exterior the turbine engine 101 through the exhaust section 132.

The use of the variation of temperatures of the fuel (e.g., the first temperature (T1), the second temperature (T2), the third temperature (T3), etc.) ensures that the momentum of the fuel is sufficient to ensure that all of the fuel is ignited. Put another way, the variation in the temperatures of the fuel ensures that pockets of unignited stagnant or stationary fuel (hereinafter referred to as "pockets of fuel") are limited or otherwise eliminated from forming within the fuel nozzle 108, within the combustion chamber 104, exterior the combustion chamber 104, or exterior the combustion section 100. It is contemplated that these pockets fuel can ignite if allowed to form. Damage to the turbine engine 101 can occur if these pockets of fuel are provided within an undesired area of the turbine engine 101 or otherwise within an area of the turbine engine 101 not adapted to have an open flame (combusted fuel).

The combustion section 100, as described herein, eliminates these pockets of fuel by ensuring that the momentum of the fuel is always high enough such that these pockets of fuel do not form. This is done by supplying the fuel to the combustion chamber 104 at varying temperatures, as described herein.

This is especially important when utilizing H2 fuel as a primary fuel. As discussed herein, H2 fuel has a high tendency to spread out. Put another way, H2 fuel has a higher tendency to create the pockets of fuel within the combustion section 100. Using the variation of the temperature ensures that the momentum of the H2 fuel is always high enough to avoid the formation of the pockets of fuel. Pockets of fuel are increasingly more detrimental to the health of the turbine engine 101 when using H2 fuel as the primary fuel. H2 fuel has a higher flame speed and burn temperature than conventional fuels. As such, if the pockets of fuel form, the H2 fuel will have a higher likelihood of igniting as the flame within the combustion chamber 104 will spread faster to undesired regions of the turbine engine 101 that may or may not include the pockets of fuel. Further, if these pockets of fuel containing H2 fuel are allowed to ignite, the high burn temperature of the H2 fuel will degrade components of the turbine engine 101 faster if these components are not made to withstand the high burn temperatures of H2 fuel.

The variation of the temperatures can be based on the operational state of the turbine engine 101. During full or larger load conditions (e.g., during flight), the flow of compressed air (Fc) can be sufficient enough to ensure that the flow of fuel has a sufficient momentum to ensure that the pockets of fuel are limited or eliminated from forming. However, during low load conditions (e.g., during relight or ground start) the flow of compressed air (Fc) has a lower momentum as the turbine engine 101 is not fully started, which might otherwise allow for the formation of the pockets of fuel . However, the variation of the temperatures of the fuel provided via the heat exchanger 152 ensures that these pockets of fuel are limited or eliminated from forming even during low load conditions.

The fuel within the fuel supply 150 is any suitable fuel or combination of fuels. As a non-limiting example, the fuel within the fuel supply 150 is a liquid H2 fuel. As a non-limiting example, the fuel supply 150 can include two or more fuel supplies. A first fuel supply of the two or more fuel supplies can include an H2 fuel while a second fuel supply of the two or more fuel supplies can be a non-H2 conventional fuel (e.g., methane, propane, butane, etc.). The H2 fuel and the non-H2 conventional fuel can be mixed prior to entering the heat exchanger 152. Alternatively, the H2 fuel and the non-H2 conventional fuel can be mixed downstream of the heat exchanger 152 (e.g., within the combustion chamber 104, within the fuel nozzle 108, or the like). In such a case, the H2 fuel is defined as a primary fuel, while the non-H2 conventional fuel or any other fuel, diluent, or the like, is defined as a secondary fuel.

FIG. 5 is a schematic cross-sectional view of the combustion section 100 of FIG. 4. The mixed flow of fuel and air (Fm) is ignited (e.g., via the ignitor 72 of FIG. 3). The ignition of the mixed flow of fuel and air (Fm) generates a flame 176 within the combustion chamber 104.

The flame 176 is defined by a flame profile. Specifically, the flame 176 extends into the combustion chamber 104 to a maximum radial extent 180 and a maximum axial extent 178, with respect to the fuel nozzle centerline 116 of the fuel nozzle 108 that the mixed flow of fuel and air (Fm) is emitted from. The maximum radial extent 180 is provided a radial distance (Rd) from the fuel nozzle centerline 116 of the fuel nozzle 108 that the mixed flow of fuel and air (Fm) is emitted from. The maximum axial extent 178 is provided an axial distance (Ad) from the fuel nozzle centerline 116 of the fuel nozzle 108 that the mixed flow of fuel and air (Fm) is emitted from.

The size of the axial distance (Ad) and the radial distance (Rd) is affected by whether the first flow of fuel (F1) is surrounded by the second flow of fuel (F2), or vice-versa. If the first flow of fuel (F1) is surrounded by the second flow of fuel (F2), the axial distance (Ad) will be larger and the radial distance (Rd) will be smaller with respect to an instance where the second flow of fuel (F2) is surrounded by the first flow of fuel (F1). This relationship is due to the variation in the temperature between the first flow of fuel (F1) and the second flow fuel (F2). Specifically, when the lower temperature fuel (e.g.., the first flow of fuel (F1)) is provided inward from the higher temperature fuel (e.g., the second flow of fuel (F2)), the outside or circumference of the mixed flow of fuel and air (Fm) has a higher momentum due to the higher temperature fuel having a higher momentum than the lower temperature fuel. This causes the flame 176 to be pushed axially aft from the wall 102 and constricted radially inward, with respect to the fuel nozzle centerline 116. Conversely, when the lower temperature fuel (e.g.., the first flow of fuel (F1)) is provided outward from the higher temperature fuel (e.g., the second flow of fuel (F2)), the outside or circumference of the mixed flow of fuel and air (Fm) has a lower momentum due to the lower temperature fuel having a lower momentum than the higher temperature fuel. This causes the flame 176 to be remain axially closer to the wall 102 and expand radially outward, with respect to the fuel nozzle centerline 116.

The variation in the flame profile through the variation in temperatures are used based on the operational state of the turbine engine 101 (FIG. 4). As a non-limiting example, during low load conditions (e.g., during startup, idle, cruise, etc.) a radially wider flame 176 is used. The wider flame 176 during low load conditions allows for the flame 176 within the combustion chamber 104 to spread out radially with respect to the fuel nozzle centerline 116 thus creating an instantaneous, uniform temperature distribution within the combustion chamber 104. The instantaneous, uniform temperature distribution is especially advantageous during startup of the combustion section 100. As a non-limiting example, during high load conditions (e.g., takeoff, landing, etc.) a radially narrow flame 176 is used. During high load conditions, the flame 176 burns hotter than during low load conditions. As such, maintaining a narrower flame 176 during high load conditions ensures that the flame 176 does not get too close to and overly heat a respective portion of the wall 102 or any other wall within the combustion section 100. The narrower flame 176 during high load conditions ensures that portions of the combustion section 100 or exterior the combustion section 100 are not damaged by the heat of the flame 176.

With reference to FIGs. 4 and 5, the controller module 103 can be communicatively coupled to the set of valves (e.g., the first valve 109, the second valve 111, the third valve 113, the fourth valve 115, the fifth valve 117, etc.) to automatically control a flow of fluids to or within respective portions of the combustion section 100. As a non-limiting example, the controller module 103 can automatically control the flow of fuel via at least one of the first fuel line 164, the second fuel line 166, the third fuel line 168, any other fuel line, or a combination thereof to a respective portion(s) of the combustion chamber 104. As a non-limiting example, the controller module 103 can automatically control which fuel at which temperature is supplied to which fuel injection channel (e.g., the first fuel injection channel 118 and the second fuel injection channel 120). Put another way, the controller module 103 can automatically change the higher temperature fuel to surround the lower temperature fuel in the mixed flow of fuel and air (Fm) or vice-versa. As such, the controller module 103 can automatically control the profile of the flame 176 based on the operational state of the turbine engine 101.

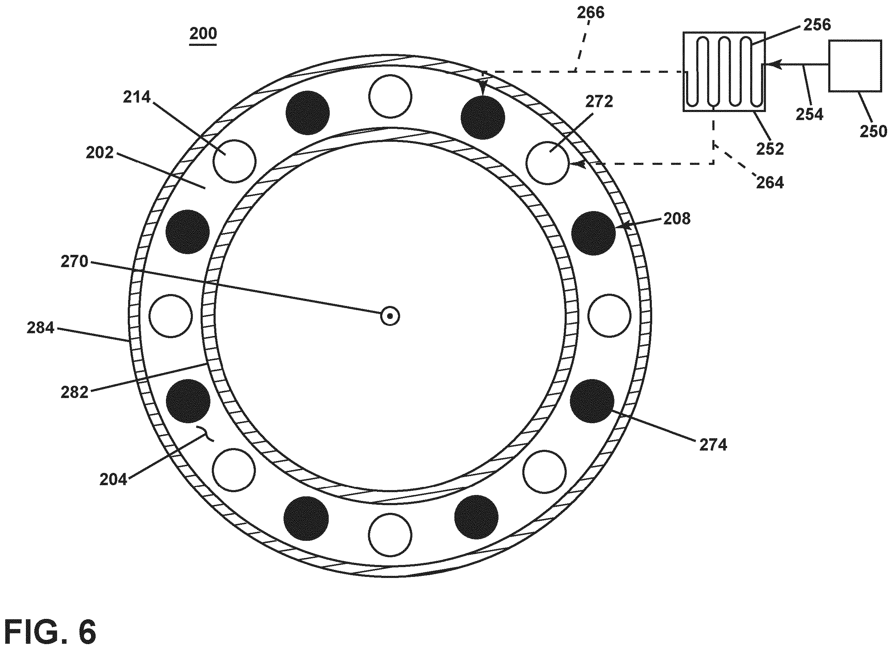

FIG. 6 is a schematic cross-sectional view of an exemplary combustion section 200 suitable for use as the combustion section 100 of FIG. 4. The combustion section 200 is similar to the combustion section 100; therefore, like parts will be identified with like numerals increased to the 200 series with it being understood that the description of the combustion section 100 applies to the combustion section 200 unless noted otherwise.

The combustion section 200 includes a combustor centerline 270, an inner combustor liner 282 (e.g., the inner combustor liner 42 of FIG. 2), an outer combustor liner 284 (e.g., the outer combustor liner 40 of FIG. 2), and a wall 202 extending therebetween. The inner combustor liner 282, the outer combustor liner 284, and the wall 202 at least partially defining a combustion chamber 204. The wall 202, as illustrated, is a dome wall; however, it will be appreciated that the wall 202 can be any suitable wall of the combustion section 200 at least partially defining the combustion chamber 204 such as, but not limited to, the inner combustor liner 282, the outer combustor liner 284, or a combination hereof.

A first fuel line 264 and a second fuel line 266 fluidly couple a heat exchanger 252 to the combustion chamber 204 via a plurality of fuel nozzles 208. The heat exchanger 252 includes an internal flow path 256. A heat exchanger inlet conduit 254 fluidly couples the heat exchanger 252 to a fuel supply 250. While illustrated as being formed with the combustion section 200, it will be appreciated that at least one of the heat exchanger 252, the fuel supply 250, or a combination thereof can be provided exterior the combustion section 200.

The combustion section 200 is similar to the combustion section 100 (FIG. 4) in that the combustion section 200 includes a fuel nozzle; specifically, the plurality of fuel nozzles 208 each opening to the combustion chamber 204 at a fuel nozzle outlet 214. The plurality of fuel nozzles 208, however, includes two or more sets of fuel nozzles. As a non-limiting example, the plurality of fuel nozzles 208 include a first set of fuel nozzles 272 and a second set of fuel nozzles 274. For purposes of illustration, the first set of fuel nozzles 272 and the second set of fuel nozzles 274 are shaded differently. The first set of fuel nozzles 272 are coupled to the first fuel line 264. The first set of fuel nozzles 272 and the second set of fuel nozzles 274 are alternately arranged with respect to one another. Put another way, each first fuel nozzle for the first set of fuel nozzles 272 is circumferentially adjacent to two second fuel nozzles of the set of fuel nozzles 274, with respect to the combustor centerline 270. It will be appreciated that the plurality of fuel nozzles 208 are arranged in an alternating pattern.

The second set of fuel nozzles 274 are coupled to the second fuel line 266. As such, the first set of fuel nozzles 272 output a first flow of fuel (e.g., the first flow of fuel (F1) of FIG. 4) at a first temperature (e.g., the first temperature (T1) of FIG. 4), and the second set of fuel nozzles 274 output a second flow of fuel (e.g., the second flow of fuel (F2) of FIG. 4) at a second temperature (e.g., the first temperature (T2) of FIG. 4).

It will be appreciated, however, that the difference between each set of fuel nozzles of the plurality of fuel nozzles 208 is that each set outputs a respective flow of fuel at a temperature and/or momentum that differs from the other set of fuel nozzles. As a non-limiting example, the first set of fuel nozzles 272 can be fluidly coupled to both the first fuel line 264 and the second fuel line 266, like the fuel nozzle 108 of FIG. 4, while the second set of fuel nozzles 274 can be fluidly coupled to only the first fuel line 264, the second fuel line 266, another fuel line, or some other combination thereof. As a non-limiting example, both the first set of fuel nozzles 272 and the second set of fuel nozzles 274 can be coupled to both the first fuel line 264 and the second fuel line 266. The first flow of fuel (F1) from the first fuel line 264 can surround the second flow of fuel (F2) from the second fuel line 266 in the first set of fuel nozzles 272, and vice-versa in the second set of fuel nozzles 274.

For purposes of illustration, a single first fuel line 264 and a single second fuel line 266 are illustrated as extending to a single first fuel nozzle of the first set of fuel nozzles 272 and a single second fuel nozzle the second set of fuel nozzles 274, respectively. It will be appreciated, however, that each fuel nozzle of the plurality of fuel nozzles 208 is fluidly coupled to any suitable respective fuel line extending from the heat exchanger 252.

Each set of fuel nozzles includes any number of one or more fuel nozzles of the plurality of fuel nozzles 208. The first set of fuel nozzles 272 can include a total number of fuel nozzles that is equal to or different from a total number of fuel nozzles of the second set of fuel nozzles 274. While only illustrated as including the first set of fuel nozzles 272 and the second set of fuel nozzles 274, it will be appreciated that the plurality of fuel nozzles 208 includes any number of two or more sets of fuel nozzles with each configured to output a flow of fuel at a respective differing temperature between the sets of fuel nozzles. As a non-limiting example, the plurality of fuel nozzles 208 can include a third set of fuel nozzles outputting a flow of fuel at a third temperature (e.g., the third temperature (T3) of FIG. 4). As a non-limiting example, the plurality of fuel nozzles 208 can include a third set of fuel nozzles outputting a flow of fuel at both the first temperature and the second temperature (e.g., similar to the fuel nozzle 108 of FIG. 4).

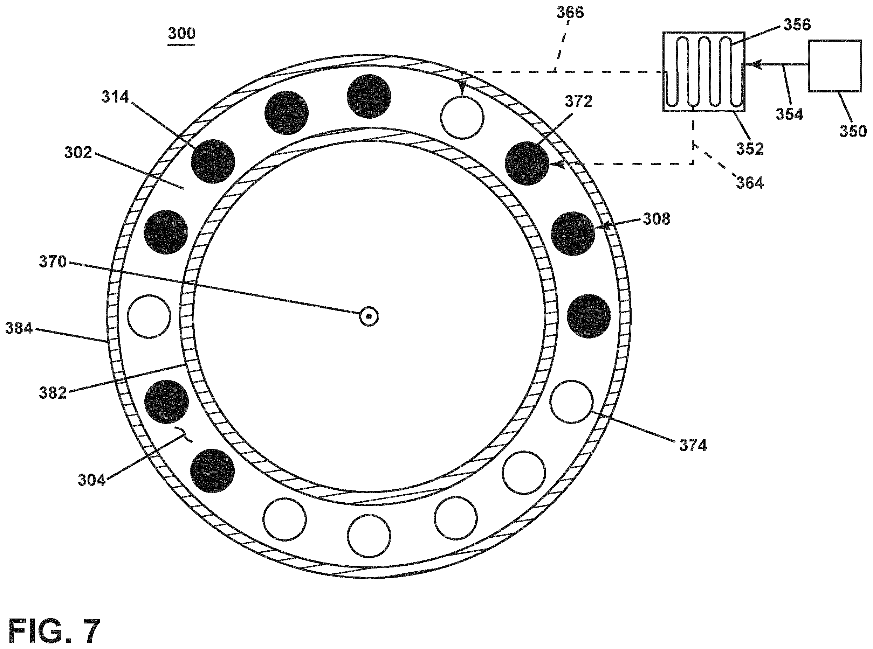

FIG. 7 is a schematic cross-sectional view of an exemplary combustion section 300 suitable for use as the combustion section 100 of FIG. 4. The combustion section 300 is similar to the combustion sections 100, 200 (FIG. 6); therefore, like parts will be identified with like numerals increased to the 300 series with it being understood that the description of the combustion sections 100, 200 can apply to the combustion section 300 unless noted otherwise.

The combustion section 300 includes a combustor centerline 370, an inner combustor liner 422 (e.g., the inner combustor liner 42 of FIG. 3), an outer combustor liner 384 (e.g., the outer combustor liner 40 of FIG. 3), and a wall 302 extending therebetween. The inner combustor liner 422, the outer combustor liner 384, and the wall 302 at least partially defining a combustion chamber 304. The wall 302, as illustrated, is a dome wall; however, it will be appreciated that the wall 302 can be any suitable wall of the combustion section 300 at least partially defining the combustion chamber 304 such as, but not limited to, the inner combustor liner 422, the outer combustor liner 384, or a combination hereof.

A first fuel line 364 and a second fuel line 366 fluidly couple a heat exchanger 352 to the combustion chamber 304. The heat exchanger 352 includes an internal flow path 356. A heat exchanger inlet conduit 354 fluidly couples the heat exchanger 352 to a fuel supply 350. While illustrated as being formed with the combustion section 300, it will be appreciated that at least one of the heat exchanger 352, the fuel supply 350, or a combination thereof can be provided exterior the combustion section 300.

The combustion section 300 is similar to the combustion section 200 (FIG. 6) in that the combustion section 300 includes a plurality of fuel nozzles 308 each opening to the combustion chamber at a fuel nozzle outlet 314. The plurality of fuel nozzles 308 include two or more sets of fuel nozzles. As a non-limiting example, the plurality of fuel nozzles 308 include a first set of fuel nozzles 372 and a second set of fuel nozzles 374. For purposes of illustration, the first set of fuel nozzles 372 and the second set of fuel nozzles 374 are shaded in differing tones. The first set of fuel nozzles 372 are coupled to the first fuel line 364. The difference with respect to the combustion section 200 is that in the combustion section 300, the first set of fuel nozzles 372 are non-alternately or otherwise non-uniformly circumferentially arranged with respect to the second set of fuel nozzles 374. As a non-limiting example, in the illustrated example a second fuel nozzle of the second set of fuel nozzles 374 is circumferentially adjacent three first fuel nozzles of the first set of fuel nozzles 372. The three first fuel nozzles of the set of first fuel nozzles 372 are circumferentially adjacent to five second fuel nozzles of the second set of fuel nozzles 374.

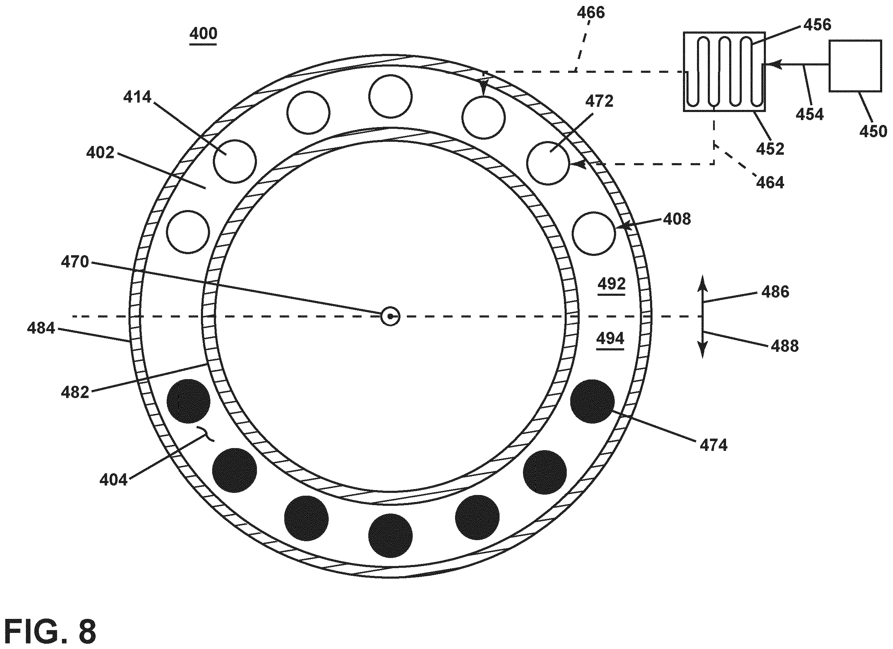

FIG. 8 is a schematic cross-sectional view of an exemplary combustion section 400 suitable for use as the combustion section 100 of FIG. 4. The combustion section 400 is similar to the combustion section 100, 200 (FIG. 6), 300 (FIG. 7); therefore, like parts will be identified with like numerals increased to the 400 series with it being understood that the description of the combustion section 100, 200, 300 applies to the combustion section 400 unless noted otherwise.

The combustion section 400 includes a combustor centerline 470, an inner combustor liner 482 (e.g., the inner combustor liner 42 of FIG. 3), an outer combustor liner 484 (e.g., the outer combustor liner 40 of FIG. 3), and a wall 402 extending therebetween. The inner combustor liner 482, the outer combustor liner 484, and the wall 402 at least partially defining a combustion chamber 404. The wall 402, as illustrated, is a dome wall; however, it will be appreciated that the wall 402 can be any suitable wall of the combustion section 400 at least partially defining the combustion chamber 404 such as, but not limited to, the inner combustor liner 482, the outer combustor liner 484, or a combination hereof.

A first fuel line 464 and a second fuel line 466 fluidly couple a heat exchanger 452 to the combustion chamber 404. The heat exchange includes an internal flow path 456. A heat exchanger inlet conduit 454 fluidly couples the heat exchanger 452 to a fuel supply 450. While illustrated as being formed with the combustion section 400, it will be appreciated that at least one of the heat exchanger 452, the fuel supply 450, or a combination thereof can be provided exterior the combustion section 400.

The combustion section 400 is similar to the combustion section 200 (FIG. 6), 300 (FIG. 7) in that the combustion section 400 includes a plurality of fuel nozzles 408 each opening to the combustion chamber at a fuel nozzle outlet 414. The plurality of fuel nozzles 408 include two or more sets of fuel nozzles. As a non-limiting example, the plurality of fuel nozzles 408 include a first set of fuel nozzles 472 and a second set of fuel nozzles 474. For purposes of illustration, the first set of fuel nozzles 472 and the second set of fuel nozzles 474 are shaded in differing tones. The first set of fuel nozzles 472 are coupled to the first fuel line 464. The difference with respect to the combustion section 200, 300 is that the combustion section 400 is that the combustion section is split between a first half 486 and a second half 488, with respect to the combustor centerline 470. A first sector 492 of the wall 402 is provided within the first half 486. A second sector 494 of the wall 402 is provided within the second half 488. The first set of fuel nozzles 472 are provided within the first sector 492. The second set of fuel nozzles 474 are provided within the second sector 494. While illustrated as two equal sized halves, it will be appreciated that the first sector 492 can be larger or smaller than the second sector 494.

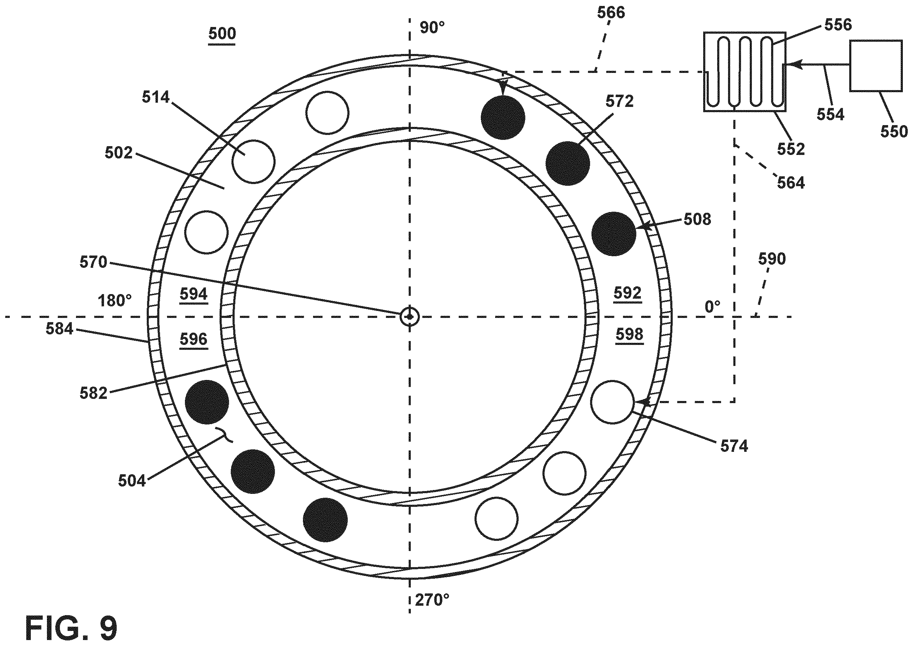

FIG. 9 is a schematic cross-sectional view of an exemplary combustion section 500 suitable for use as the combustion section 100 of FIG. 5. The combustion section 500 is similar to the combustion section 100, 200 (FIG. 6), 300 (FIG. 7), 400 (FIG. 8); therefore, like parts will be identified with like numerals increased to the 500 series with it being understood that the description of the combustion section 100, 200, 300, 400 applies to the combustion section 500 unless noted otherwise.

The combustion section 500 includes a combustor centerline 570, an inner combustor liner 582 (e.g., the inner combustor liner 42 of FIG. 3), an outer combustor liner 584 (e.g., the outer combustor liner 40 of FIG. 3), and a wall 502 extending therebetween. The inner combustor liner 582, the outer combustor liner 584, and the wall 502 at least partially defining a combustion chamber 504. The wall 502, as illustrated, is a dome wall; however, it will be appreciated that the wall 502 can be any suitable wall of the combustion section 500 at least partially defining the combustion chamber 504 such as, but not limited to, the inner combustor liner 582, the outer combustor liner 584, or a combination hereof.

A first fuel line 564 and a second fuel line 566 fluidly couple a heat exchanger 552 to the combustion chamber 504. The heat exchange includes an internal flow path 556. A heat exchanger inlet conduit 554 fluidly couples the heat exchanger 552 to a fuel supply 550. While illustrated as being formed with the combustion section 500, it will be appreciated that at least one of the heat exchanger 552, the fuel supply 550, or a combination thereof can be provided exterior the combustion section 500.

The combustion section 500 is similar to the combustion section 200 (FIG. 6), 300 (FIG. 7), 400 (FIG. 8) in that the combustion section 500 includes a plurality of fuel nozzles 508 each opening to the combustion chamber at a fuel nozzle outlet 514. The plurality of fuel nozzles 508 include two or more sets of fuel nozzles. As a non-limiting example, the plurality of fuel nozzles 508 include a first set of fuel nozzles 572 and a second set of fuel nozzles 574. For purposes of illustration, the first set of fuel nozzles 572 and the second set of fuel nozzles 574 are shaded in differing tones. The combustion section 500 is similar to the combustion section 400 (FIG. 8) in that the combustion section 500 is split into a plurality of sectors. The difference, however, is that the combustion section 500 includes three or more sectors; specifically, a first sector 592, a second sector 594, a third sector 596, and a fourth sector 598. The first sector 592, the second sector 594, the third sector 596, and the fourth sector 598 can each be respective quadrants of a polar coordinate system 590. As such, the first sector 592, the second sector 594, the third sector 596, and the fourth sector 598 can be evenly sized. Each of the first sector 592, the second sector 594, the third sector 596, and the fourth sector 598 include a respective one set of fuel nozzles of the plurality of fuel nozzles 508. As a non-limiting example, the first sector 592 and the third sector 596 include the first set of fuel nozzles 572, while the second sector 594 and the fourth sector 598 include the second set of fuel nozzles 574.

At least two of the first sector 592, the second sector 594, the third sector 596, or the fourth sector 598, can be the same size. At least two of the first sector 592, the second sector 594, the third sector 596, or the fourth sector 598 can be different sizes. The wall 502 can be split into any number of two or more sectors.

With reference to FIGs. 6-8, the variation between the location of the first set of fuel nozzles 272, 372, 472, 572, the second set of fuel nozzles 274, 374, 474, 574, or any other set of fuel nozzles of the plurality of fuel nozzles 208, 308, 408, 508 allows for a control of combustion dynamics within the combustion chamber 204, 304, 404, 504. As used herein, combustion dynamics refers to the acoustic oscillation of pressure waves generated through combustion of fuel within the combustion chamber 204, 304, 404, 504. The combustion dynamics, if left unchecked, can damage portions of the combustion section 200, 300, 400, 500, portions exterior the combustion section 200, 300, 400, 500 or otherwise result in an undesired temperature profile of the combustion gases exiting the combustion section 200, 300, 400, 500.

Benefits associated with the present disclosure include a turbine engine with an increased lifespan when compared to the conventional turbine engine. For example, the conventional turbine engine can utilize a combustion section with a flow of fuel and flow of compressed air. The conventional combustion section relies on the flow of compressed air to increase the momentum of the flow of fuel to help protect against the pockets of fuel being formed. The flow of compressed air, however, is lower during low load operational states of the conventional turbine engine. This, in turn, means that pockets of fuel can be formed which, if ignited, can cause damage to the turbine engine thus decreasing the lifespan of the turbine engine. The turbine engine, as described herein, however, utilizes the fuel at two or more temperatures being fed to the combustion section. The variation in the temperatures, in turn, means that the flow of fuel can have an increased momentum without the reliance solely on the flow of compressed air. As such, the momentum of the fuel can be sufficient enough to avoid the formation of the pockets of fuel even during low load operational states of the turbine engine.

Benefits associated with the present disclosure include a combustion section better suited for H2 fuels. As discussed herein, the variation in the temperature of the fuels helps ensure that the formation of the pockets of fuel is limited or otherwise completely eliminated. The pockets of fuel, when using H2 fuel as the primary fuel source, are much more detrimental to the health of the turbine engine than conventional fuels as H2 fuel has a higher burn temperature and faster flame speed.

Benefits associated with using hydrogen-containing fuel over traditional fuels include an eco-friendlier engine as the hydrogen-containing fuel, when combusted, generates less carbon pollutants than a combustor using traditional fuels. For example, a combustor including 100% hydrogen-containing fuel (e.g., the fuel is 100% H₂) would have zero carbon pollutants. The combustor, as described herein, can be used with 100% hydrogen-containing fuel.

To the extent not already described, the different features and structures of the various embodiments can be used in combination, or in substitution with each other as desired. All combinations or permutations of features described herein are covered by this disclosure.

This written description uses examples to describe aspects of the disclosure described herein, including the best mode, and also to enable any person skilled in the art to practice aspects of the disclosure, including making and using any devices or systems and performing any incorporated methods. The patentable scope of aspects of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Further aspects are provided by the subject matter of the following clauses:

A turbine engine comprising a fuel supply having a fuel, a heat exchanger fluidly coupled to the fuel supply, a first fuel line fluidly coupled to a first portion of the heat exchanger to receive the fuel from the heat exchanger at a first temperature, and a second fuel line fluidly coupled to a second portion of the heat exchanger to receive the fuel from the heat exchanger at a second temperature, different from the first temperature, and a combustion section including a combustion chamber, the combustion chamber being fluidly coupled to the first fuel line and the second fuel line.

A turbine engine comprising a compression section, combustion section, and turbine section in serial flow arrangement, a first fuel line fluidly coupled to the combustion section to supply a first fuel at a first temperature, and a second fuel line fluidly coupled to the combustion section to supply a second fuel at a second temperature, wherein the first fuel and second fuel have the same phase of matter and the first temperature is different from the second temperature.

The turbine engine of any preceding clause, wherein the combustion section further comprises a wall at least partially defining the combustion chamber, the wall having a fuel nozzle opening, and a fuel nozzle provided fluidly coupled with the fuel nozzle opening, the fuel nozzle having a fuel nozzle outlet opening to the combustion chamber, a fuel nozzle centerline, and a first fuel injection channel fluidly coupled to the first fuel line.

The turbine engine of any preceding clause, wherein the fuel nozzle has a second fuel injection channel fluidly coupled to the second fuel line.

The turbine engine of any preceding clause, wherein the first fuel injection channel is provided radially outward from the second fuel injection channel, with respect to the fuel nozzle centerline.

The turbine engine of any preceding clause, wherein the first fuel injection channel is provided radially inward from the second fuel injection channel, with respect to the fuel nozzle centerline.

The turbine engine of any preceding clause, wherein the first fuel injection channel includes a first fuel orifice axially aligned with the fuel nozzle outlet, with respect to the fuel nozzle centerline.

The turbine engine of any preceding clause, wherein the fuel nozzle is included within a plurality of fuel nozzles spaced along the wall, the plurality of fuel nozzles including a first fuel nozzle fluidly coupled to the first fuel line, and a second fuel nozzle fluidly coupled to the second fuel line.

The turbine engine of any preceding clause, wherein the first fuel nozzle is included in a first plurality of fuel nozzles, and the second fuel nozzle is included in a second plurality of fuel nozzles.

The turbine engine of any preceding clause, wherein the combustion section includes a combustor centerline, and the first plurality of fuel nozzles are alternately circumferentially spaced from the second plurality of fuel nozzles, with respect to the combustor centerline.

The turbine engine of any preceding clause, wherein the combustion section includes a combustor centerline, and the first plurality of fuel nozzles are non-alternately circumferentially spaced from the second plurality of fuel nozzles, with respect to the combustor centerline.

The turbine engine of any preceding clause, further comprising a first valve provided along the first fuel line and being configured to selectively fluidly couple the first portion to the combustion chamber, and a second valve provided along the second fuel line and being configured to selectively fluidly couple the second portion to the combustion chamber.

The turbine engine of any preceding clause, further comprising a third fuel line fluidly coupled to a third portion of the heat exchanger and drawing the fuel from the heat exchanger at a third temperature, different from the first temperature and the second temperature.

The turbine engine of any preceding clause, wherein the heat exchanger is provided within a combustion section interior of the combustion section.

The turbine engine of any preceding clause, wherein the fuel supply is provided exterior the combustion section.

The turbine engine of any preceding clause, wherein the fuel comprises hydrogen.

The turbine engine of any preceding clause, wherein the first temperature and the second temperature are less than an auto-ignition temperature of the fuel.

The turbine engine of any preceding clause, further comprising a compression section, a turbine section, and at least one bleed air conduit fluidly coupling a bleed air from at least one of compression section or the turbine section to the heat exchanger.

The turbine engine of any preceding clause, wherein the phase of matter is a gaseous phase.

The turbine engine of any preceding clause, wherein at least one of the first fuel and the second fuel is a fuel mixture.

The turbine engine of any preceding clause, further comprising a first valve provided along the first fuel line and being configured to selectively fluidly couple the first portion to the combustion chamber, and a second valve provided along the second fuel line and being configured to selectively fluidly couple the second portion to the combustion chamber.

The turbine engine of any preceding clause, further a third fuel line fluidly coupling a third portion of the heat exchanger to the combustion chamber, and a third valve selectively fluidly coupling the third fuel line to the combustion chamber.

The turbine engine of any preceding clause, further comprising a first valve selectively fluidly coupling the fuel supply to the heat exchanger.

The turbine engine of any preceding clause, further comprising a bleed air conduit fluidly coupling a bleed air form the turbine engine to the heat exchanger, and a fourth valve selectively fluidly coupling the bleed air to the heat exchanger.

The turbine engine of any preceding clause, further comprising a controller module configured to automatically supply the first flow of fuel and the second flow of fuel to the combustion chamber.

The turbine engine of any preceding clause, further comprising a controller module configured to automatically supply a third flow of fuel from a third fuel line to the combustion chamber.

The turbine engine of any preceding clause, further comprising a controller module configured to automatically supply the fuel from the fuel supply to the heat exchanger.

The turbine engine of any preceding clause, further comprising a controller module configured to automatically supply a flow of bleed air to the heat exchanger.

The turbine engine of any preceding clause, further comprising a controller module configured to measure at least one of a temperature, flow rate, or pressure of the first flow of fuel and the second flow of fuel.

The turbine engine of any preceding clause, further comprising a controller module configured to measure a temperature of the combustion chamber.

The turbine engine of any preceding clause, further comprising a controller module configured to automatically adjust the location of where the first flow of fuel and the second flow of fuel are fed to the combustion chamber based on the measured temperature.

The turbine engine of any preceding clause, wherein the first temperature is greater than the second temperature and the first fuel injection channel surrounds the second fuel injection channel to create a wide flame within the combustion chamber.

The turbine engine of any preceding clause, wherein the wide flame is used during low load conditions of the turbine engine.

The turbine engine of any preceding clause, wherein the first temperature is greater than the second temperature and the first fuel injection channel is surrounded by the second fuel injection channel to create a narrow flame within the combustion chamber.

The turbine engine of any preceding clause, wherein the wide flame is used during high load conditions of the turbine engine.

The turbine engine of any preceding clause, further comprising a bleed air conduit feeding a bleed air to the heat exchanger via a heat source inlet line.

The turbine engine of any preceding clause, further comprising a heat source outlet line configured to exhaust the bleed air from the heat exchanger.

The turbine engine of any preceding clause, wherein the bleed air from the heat source outlet line is exhausted exterior the turbine engine.

The turbine engine of any preceding clause, wherein the bleed air from the heat source outlet line is exhausted into the turbine engine.

The turbine engine of any preceding clause, wherein the bleed air from the heat source outlet line is used for cooling of the turbine engine.

The turbine engine of any preceding clause, wherein the fuel supply is provide exterior the turbine engine.

The turbine engine of any preceding clause, wherein the turbine engine is coupled to an aircraft and the fuel supply is provided along the aircraft.

The turbine engine of any preceding clause, wherein the fuel supply is provided along one of a wing, a pylon or a fuselage of the aircraft.

## Claims

1. A turbine engine (10, 101) comprising:
a fuel supply (150, 250, 350, 450) having a fuel;
a heat exchanger (152, 252, 352, 452) fluidly coupled to the fuel supply (150, 250, 350, 450);
a first fuel line (164, 264, 364, 464) fluidly coupled to a first portion (167) of the heat exchanger (152, 252, 352, 452) to receive the fuel from the heat exchanger (152, 252, 352, 452) at a first temperature (T1);
a second fuel line (166, 266, 366, 466) fluidly coupled to a second portion (169) of the heat exchanger (152, 252, 352, 452) to receive the fuel from the heat exchanger (152, 252, 352, 452) at a second temperature (T2), different from the first temperature (T1); and
a combustion section (14, 100, 200, 300, 400) including a combustion chamber (46, 104, 204, 304, 404), the combustion chamber (46, 104, 204, 304, 404) being fluidly coupled to the first fuel line (164, 264, 364, 464) and the second fuel line (166, 266, 366, 466).

2. The turbine engine (10, 101) of claim 1, wherein the combustion section (14, 100, 200, 300, 400) further comprises:
a wall (102, 202, 302, 402) at least partially defining the combustion chamber (46, 104, 204, 304, 404), the wall (102, 202, 302, 402) having a fuel nozzle opening (78, 106); and
a fuel nozzle (108, 208, 308, 408) provided fluidly coupled with the fuel nozzle opening (78, 106), the fuel nozzle (108, 208, 308, 408) having a fuel nozzle outlet (114, 214, 314, 414) opening to the combustion chamber (46, 104, 204, 304, 404), a fuel nozzle centerline (116, 216, 316, 416), and a first fuel injection channel (118) fluidly coupled to the first fuel line (164, 264, 364, 464).

3. The turbine engine (10, 101) of claim 2, wherein the fuel nozzle (108, 208, 308, 408) has a second fuel injection channel (120) fluidly coupled to the second fuel line (166, 266, 366, 466).

4. The turbine engine (10, 101) for claim 3, wherein the first fuel injection channel (118) is provided radially outward from the second fuel injection channel (120), with respect to the fuel nozzle centerline (116, 216, 316, 416).

5. The turbine engine (10, 101) of claim 2, wherein the fuel nozzle (108, 208, 308, 408) is included within a plurality of fuel nozzles (108, 208, 308, 408) spaced along the wall (102, 202, 302, 402), the plurality of fuel nozzles (108, 208, 308, 408) including:
a first fuel nozzle (272, 372, 472) fluidly coupled to the first fuel line (164, 264, 364, 464); and
a second fuel nozzle (274, 374, 474) fluidly coupled to the second fuel line (166, 266, 366, 466).

6. The turbine engine (10, 101) of claim 5, wherein:
the first fuel nozzle (272, 372, 472) is included in a first plurality of first fuel nozzles;
the second fuel nozzle (274, 374, 474) is included in a second plurality of second fuel nozzles; and
the combustion section (14, 100, 200, 300, 400) includes a combustor centerline (30, 270, 370, 470), and the first plurality of fuel nozzles are alternately circumferentially spaced from the second plurality of fuel nozzles, with respect to the combustor centerline (30, 270, 370, 470).

7. The turbine engine (10, 101) of claim 8, wherein:
the first fuel nozzle (272, 372, 472) is included in a first plurality of first fuel nozzles;
the second fuel nozzle (274, 374, 474) is included in a second plurality of second fuel nozzles; and
the combustion section (14, 100, 200, 300, 400) includes a combustor centerline (30, 270, 370, 470), and the first plurality of fuel nozzles are non-alternately circumferentially spaced from the second plurality of fuel nozzles, with respect to the combustor centerline (30, 270, 370, 470).

8. The turbine engine (10, 101) of any of claims 1-7, further comprising:
a first valve (109) provided along the first fuel line (164, 264, 364, 464) and being configured to selectively fluidly couple the first portion (167) of the heat exchanger (152, 252, 352, 452) to the combustion chamber (46, 104, 204, 304, 404); and
a second valve (111) provided along the second fuel line (166, 266, 366, 466) and being configured to selectively fluidly couple the second portion (169) of the heat exchanger (152, 252, 352, 452) to the combustion chamber (46, 104, 204, 304, 404).

9. The turbine engine (10, 101) of any of claims 1-8, further comprising a third fuel line (168) fluidly coupled to a third portion (171) of the heat exchanger (152, 252, 352, 452) and drawing the fuel from the heat exchanger (152, 252, 352, 452) at a third temperature (T3), different from the first temperature (T1) and the second temperature (T2).

10. The turbine engine (10, 101) of any of claims 1-9, wherein the heat exchanger (152, 252, 352, 452) is provided within a combustion section interior (146) of the combustion section (14, 100, 200, 300, 400).

11. The turbine engine (10, 101) of any of claims 1-10, wherein the fuel supply (150, 250, 350, 450) is provided exterior the combustion section (14, 100, 200, 300, 400).

12. The turbine engine (10, 101) of any of claims 1-11, wherein the fuel comprises hydrogen.

13. The turbine engine (10, 101) of any of claims 1-12, further comprising a compression section (12, 128), a turbine section (16, 130), and at least one bleed air conduit (158) fluidly coupling a bleed air from at least one of compression section (12, 128) or the turbine section (16, 130) to the heat exchanger (152, 252, 352, 452).

14. A turbine engine (10, 101) comprising:
a compression section (12, 128), combustion section (14, 100, 200, 300, 400), and turbine section (16, 130) in serial flow arrangement;
a first fuel line (164, 264, 364, 464) fluidly coupled to the section (14, 100, 200, 300, 400)to supply a first fuel at a first temperature (T1); and
a second fuel line (166, 266, 366, 466) fluidly coupled to the section (14, 100, 200, 300, 400)to supply a second fuel at a second temperature (T2);
wherein the first fuel and second fuel have the same phase of matter and the first temperature (T1) is different from the second temperature (T2).

15. The turbine engine (10, 101) of claim 14, wherein the phase of matter is a gaseous phase.
